# EUROPEAN PATENT APPLICATION

(11) **EP 4 701 007 A1**
(43) Date of publication of application: **25.02.2026**
(21) Application number: 25168359.5
(22) Date of filing: 03.04.2025
(51) Int. Cl.: H02B 1/14, H01M 50/204, H02B 1/32, H02B 1/28, H02B 1/20

(54) **MARINE BUSBAR CABINET**

(30) Priority: 19.08.2024 CN 202422017930 U; 21.11.2024 WO PCT/CN2024/133570
(71) Applicant: Eve Energy Storage Co., Ltd, Wuhan, Hubei 430000 (CN)
(72) Inventor: CHEN, Hao, Wuhan, 430000 (CN); ZHANG, Han, Wuhan, 430000 (CN); FENG, Chaojun, Wuhan, 430000 (CN); GUI, Ke, Wuhan, 430000 (CN)
(74) Representative: HGF

(57) **Abstract**

A marine busbar cabinet includes a low-voltage control system (200), a high-voltage busbar system (300), a cabinet body (100), and an insulating isolation structure (400). The high-voltage busbar system (300) includes at least two battery clusters being connected in series and/or in parallel. The low-voltage control system (200) is electrically connected to the at least two battery clusters. The cabinet body (100) has an accommodation cavity (111) configured to accommodate the low-voltage control system (200) and the high-voltage busbar system (300). The insulating isolation structure (400) is disposed in the accommodation cavity (111). The insulating isolation structure (400) is configured to divide the accommodation cavity (111) into a low-voltage chamber (1) and a high-voltage chamber (2) that are insulated from each other. The low-voltage control system (200) is disposed in the low-voltage chamber (1). The high-voltage busbar system (300) is disposed in the high-voltage chamber (2).

## Description

### TECHNICAL FIELD

The present application relates to the field of marine power technology, in particular, a marine busbar cabinet.

### BACKGROUND

New energy ships have attracted widespread attention due to their advantages such as low energy consumption, zero pollution, and low costs. In new energy ships, the power system serves as the core of the propulsion system of new energy ships. The power system includes a high-voltage busbar system and a low-voltage control system. The high-voltage busbar system is configured to implement power busbar of battery clusters, while the low-voltage control system is configured to control the activation and deactivation of the high-voltage busbar system.

In the related art, the high-voltage busbar system includes multiple high-voltage boxes independently disposed, each of which contains one battery cluster. The low-voltage control system is a low-voltage box. The multiple high-voltage boxes and the low-voltage box are mutually independent. The multiple high-voltage boxes are connected to each other through a wiring harness and are connected to the low-voltage box through the wiring harness. This arrangement of multiple independently-disposed high-voltage boxes and the low-voltage box occupies excessive space. However, the cabin space in the ship is limited, and independently-disposed the high-voltage boxes and the low-voltage box cannot be accommodated. Thus, the actual mounting requirements cannot be met.

### SUMMARY

In a first aspect, the present application provides a marine busbar cabinet. The marine busbar cabinet includes a low-voltage control system, a high-voltage busbar system, a cabinet body, and an insulating isolation structure.

The high-voltage busbar system includes at least two battery clusters. The at least two battery clusters satisfy at least one of being connected in series or being connected in parallel. The low-voltage control system is electrically connected to the at least two battery clusters.

The cabinet body includes an accommodation cavity configured to accommodate the low-voltage control system and the high-voltage busbar system.

The insulating isolation structure is disposed in the accommodation cavity. The insulating isolation structure is configured to divide the accommodation cavity into a low-voltage chamber and a high-voltage chamber that are insulated from each other. The low-voltage control system is disposed in the low-voltage chamber. The high-voltage busbar system is disposed in the high-voltage chamber.

In the marine busbar cabinet provided by the present application, the cabinet body is provided with an accommodation cavity configured to accommodate the low-voltage control system and the high-voltage busbar system, the insulating isolation structure is configured to divide the accommodation cavity into a low-voltage chamber and a high-voltage chamber that are insulated from each other, the low-voltage control system is disposed in the low-voltage chamber, and the high-voltage busbar system is disposed in the high-voltage chamber. In this manner, integrated accommodation is achieved for the low-voltage control system and the high-voltage busbar system. This design not only ensures operational safety but also has a compact structure, which can effectively save the mounting space and meet practical mounting requirements. Additionally, by ensuring that the high-voltage busbar system includes at least two battery clusters connected in series and/or in parallel, the high-voltage busbar system can deliver stable and compliant electrical power, meeting the actual power demand of ships.

### BRIEF DESCRIPTION OF THE DRAWINGS

FIG. 1 is a view illustrating the structure of a marine busbar cabinet according to an embodiment of the present application.
FIG. 2 is a front view of a marine busbar cabinet according to an embodiment of the present application.
FIG. 3 is an exploded view of a marine busbar cabinet according to an embodiment of the present application.
FIG. 4 is a view illustrating the structure of a marine busbar cabinet with a hidden door body and part of the main body according to an embodiment of the present application.
FIG. 5 is a cross-sectional view of a marine busbar cabinet according to an embodiment of the present application.
FIG. 6 is a partial enlarged view of part A in FIG. 5.

### Reference list

- 1: low-voltage chamber
- 2: high-voltage chamber
- 100: cabinet body
- 110: main body
- 111: accommodation cavity
- 112: air intake assembly
- 113: air exhaust assembly
- 114: connection ring
- 120: door body
- 121: handle
- 122: indicator light
- 123: touch screen
- 124: emergency stop button
- 130: wiring structure
- 131: first fastener
- 1311: fastening protrusion
- 132: second fastener
- 1321: fastening groove
- 133: wiring slot
- 140: charging connector
- 150: discharging connector
- 200: low-voltage control system
- 210: control switch
- 220: battery management system
- 230: switching power supply
- 300: high-voltage busbar system
- 310: fuse
- 320: relay
- 400: insulating isolation structure
- 410: first bending portion
- 420: second bending portion

### DETAILED DESCRIPTION

In new energy ships, the power system serves as the core of the propulsion system of new energy ships. The power system includes a high-voltage busbar system and a low-voltage control system. The high-voltage busbar system includes multiple independently disposed high-voltage boxes, each of which contains one battery cluster. The low-voltage control system is a low-voltage box. The multiple high-voltage boxes and the low-voltage box are mutually independent. The multiple high-voltage boxes are connected to each other through the wiring harness and are connected to the low-voltage box through the wiring harness. This arrangement of multiple independently disposed high-voltage boxes and the low-voltage box occupies excessive space. However, the cabin space in ships is limited, and the independently-disposed high-voltage boxes and the low-voltage box cannot be accommodated. Thus, the actual mounting requirements cannot be met.

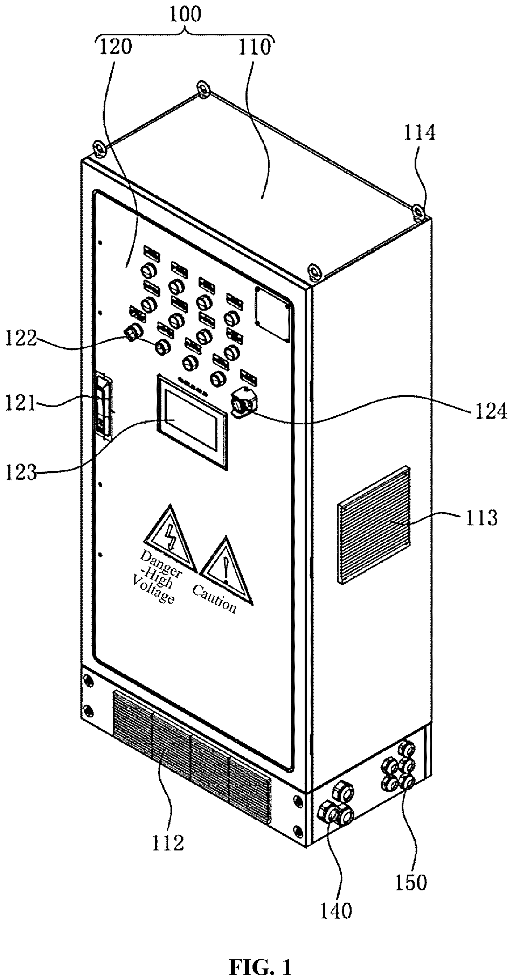

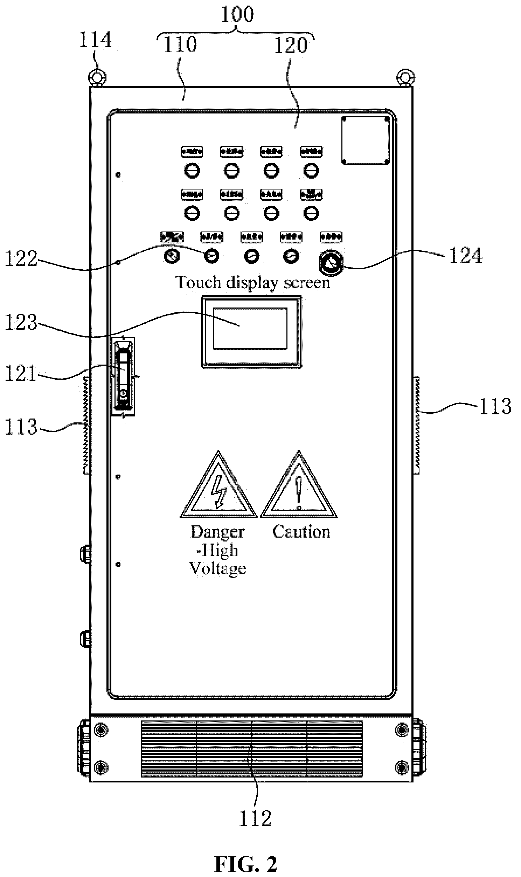

As shown in FIGS. 1 to 4, this embodiment provides a marine busbar cabinet. The marine busbar cabinet includes a cabinet body 100, a low-voltage control system 200, a high-voltage busbar system 300, and an insulating isolation structure 400. The high-voltage busbar system 300 includes at least two battery clusters connected in series and/or in parallel. The low-voltage control system 200 is electrically connected to the battery clusters. The cabinet body 100 includes an accommodation cavity 111 configured to accommodate the low-voltage control system 200 and the high-voltage busbar system 300. The insulating isolation structure 400 is disposed in the accommodation cavity 111. The insulating isolation structure 400 is configured to divide the accommodation cavity 111 into a low-voltage chamber 1 and a high-voltage chamber 2 that are insulated from each other. The low-voltage control system 200 is disposed in the low-voltage chamber 1. The high-voltage busbar system 300 is disposed in the high-voltage chamber 2.

In the marine busbar cabinet, the cabinet body 100 is provided with an accommodation cavity 111 configured to accommodate the low-voltage control system 200 and the high-voltage busbar system 300, the insulating isolation structure 400 is configured to divide the accommodation cavity 111 into a low-voltage chamber 1 and a high-voltage chamber 2 that are insulated from each other, the low-voltage control system 200 is disposed in the low-voltage chamber 1, and the high-voltage busbar system 300 is disposed in the high-voltage chamber 2. In this manner, the integrated accommodation of the low-voltage control system 200 and the high-voltage busbar system 300 is achieved. This design not only ensures operational safety but also provides a compact structure, which can effectively save the mounting space and meet practical mounting requirements. Additionally, by ensuring that the high-voltage busbar system 300 includes at least two battery clusters connected in series and/or in parallel, the high-voltage busbar system 300 can deliver stable and compliant electrical power, meeting the actual power demand of ships.

Exemplarily, in this embodiment, the high-voltage busbar system 300 includes five battery clusters connected in parallel, the maximum current of each battery cluster does not exceed 140 A. The low-voltage control system 200 can independently control the charging and discharging of each battery cluster. In other embodiments, on the premise of safety, the number of battery clusters in the high-voltage busbar system 300 and the maximum current value of each cluster may be adjusted as required as long as the low-voltage control system 200 can independently control the charging and discharging of each cluster. This embodiment does not impose any limitations. It should be noted that in this embodiment, each battery cluster has a length of 639 mm, a width of 381 mm, and a height of 1470 mm. In other embodiments, the specifications of the battery clusters may be adjusted based on actual power requirements, and the specification of the cabinet body 100 may be adaptively modified to ensure that the cabinet body 100 can integrate both the low-voltage control system 200 and the high-voltage busbar system 300.

Exemplarily, the busbar in the high-voltage busbar system 300 is a copper busbar, with a thickness of 6 mm, a length of 50 mm, and a width of 50 mm. The copper busbar has a current-carrying capacity of 800 A to ensure the busbar safety for the battery clusters. Furthermore, the electrical clearance between the copper busbar in the high-voltage busbar system 300 and the external conductive part is no less than 30 mm, thereby enhancing the safety of the use of the marine busbar cabinet.

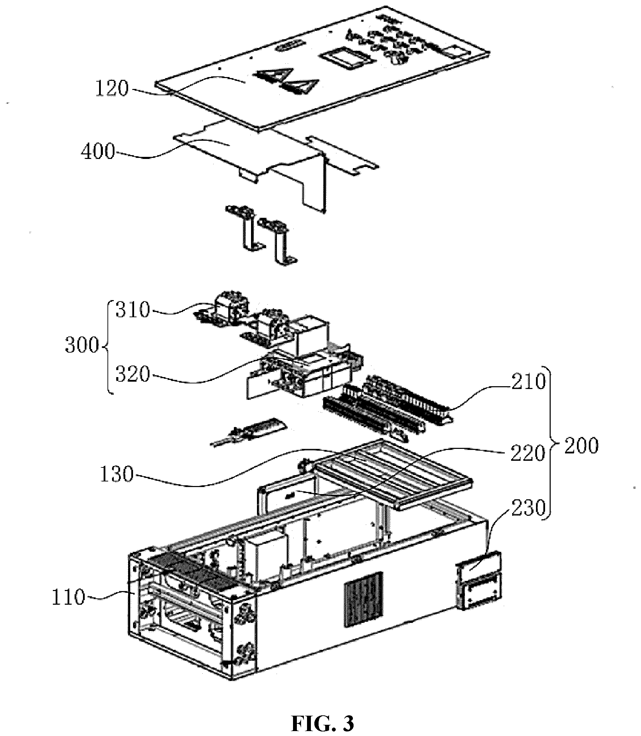

As shown in FIG. 3, in this embodiment, the low-voltage control system 200 includes a control switch 210, a battery management system 220, and a switching power supply 230. The switching power supply 230 is configured to switch the output voltage type of the battery clusters. The battery management system 220 and the switching power supply 230 are positioned on two sides of the cabinet body 100, respectively. The battery management system 220 is connected to each battery cluster via wiring harnesses and can monitor voltage information and current information of each battery cluster in real time. Each battery cluster is connected to a low-voltage communication harness via the control switch 210. The control switch 210 is configured to control the connection and disconnection between the battery clusters and the low-voltage communication harness. It should be noted that in this embodiment, the switching power supply 230 includes a direct current/direct current (DC/DC) power supply and an alternating current/direct current (AC/DC) power supply. The structures and working principles of the DC/DC power supply, AC/DC power supply, control switch 210, and battery management system 220 belong to the related art and are not repeated herein.

In this embodiment, the high-voltage busbar system 300 also includes a fuse 310 and a relay 320. Both the relay 320 and the fuse 310 are connected to the battery clusters via wiring harnesses. The control switch 210 is connected to the relay 320 via a low-voltage communication harness. The relay 320 is configured to enable the low-voltage control system 200 to control the high-voltage busbar system 300, and the fuse 310 is configured to cut off the output of the high-voltage busbar system 300 to ensure operational safety.

In one or more embodiments, the cabinet body 100 includes a main body 110 and a door body 120. The main body 110 is provided with the accommodation cavity 111. The accommodation cavity 111 is provided with an opening. The insulating isolation structure 400 can be inserted into the accommodation cavity 111 along the opening. The door body 120 is connected to the main body 110 and seals the opening. The cabinet body 100 is provided with a main body 110 having the accommodation cavity 111, and the accommodation cavity 111 is provided with an opening. In this manner, the mounting and dismantling of the insulating isolation structure 400 are facilitated. The door body 120 is connected to the main body 110 and seals the opening to enhance the protection of the low-voltage control system 200 in the low-voltage chamber 1 and the high-voltage busbar system 300 in the high-voltage chamber 2. It should be noted that in this embodiment, the door body 120 is pivotally connected to the main body 110, and a handle 121 is disposed on the door body 120 to facilitate the rotation of the door body 120 relative to the main body 110.

To enhance the stability of the main body 110, a connection ring 114 is disposed on the main body 110. The connection ring 114 can be secured to the ship cabin by a rope to prevent the main body 110 from toppling over due to jolts during the traveling of the ship. It should be noted that in this embodiment, four connection rings 114 are arranged at intervals around the circumference of the upper end of the main body 110. Each connection ring 114 is suspended and secured to the ship cabin by a rope. In other embodiments, the number of connection rings 114 may be adjusted as required, and this embodiment does not impose limitations.

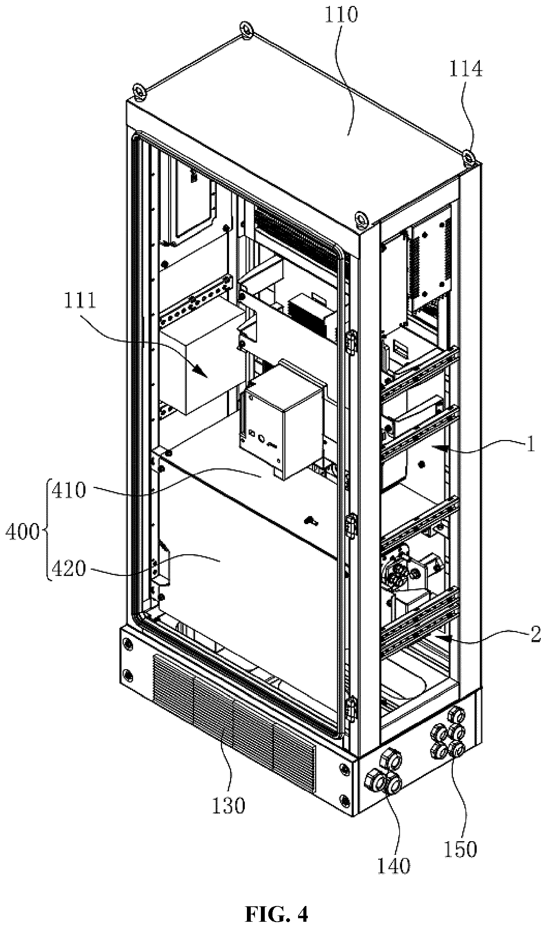

The structure of the insulating isolation structure 400 is described with reference to FIG. 4. The insulating isolation structure 400 includes a first bending portion 410 and a second bending portion 420 connected to each other. The extending direction of the first bending portion 410 is perpendicular to the plane where the opening is located. The extending direction of the second bending portion 420 is parallel to the plane where the opening is located. The second bending portion 420 is disposed at an end of the accommodation cavity 111 adjacent to the opening. The first bending portion 410 and part of the cavity wall of the accommodation cavity 111 enclose to form the low-voltage chamber 1. The low-voltage chamber 1 is in direct communication with the opening. The second bending portion 420, the first bending portion 410, and part of the cavity wall of the accommodation cavity 111 enclose to form the high-voltage chamber 2. The high-voltage chamber 2 is not in direct communication with the opening.

The insulating isolation structure 400 is configured to be a first bending portion 410 and a second bending portion 420 connected to each other so that the extending direction of the first bending portion 410 is perpendicular to the plane where the opening is located, and the accommodation cavity 111 is divided into two regions, each of the two regions directly communicating with the opening. The extending direction of the second bending portion 420 is parallel to the plane where the opening is located, and the second bending portion 420 is disposed at the end adjacent to the opening so that the second bending portion 420 can block the opening of one of the two regions divided by the first bending portion 410, and the region with the blocked opening is used as the high-voltage chamber 2. This arrangement enhances the protection of the battery clusters in the high-voltage busbar system 300. The region with an unblocked opening is designated as the low-voltage chamber 1, facilitating subsequent debugging by personnel. When it is necessary to debug the low-voltage control system 200, since the low-voltage chamber 1 directly communicates with the opening, it is only necessary to open the door body 120 to perform debugging on the low-voltage control system 200.

It should be noted that in this embodiment, both the first bending portion 410 and the second bending portion 420 are made of acrylic material, which not only provides excellent electrical insulation, high surface hardness, surface gloss, and good high-temperature resistance but also offers good processability, allowing for both thermal forming and mechanical processing. In other embodiments, the first bending portion 410 and the second bending portion 420 may also be made of other insulating materials, and this embodiment does not impose limitations.

Additionally, in this embodiment, the opening is located on the side of the accommodation cavity 111. The accommodation cavity 111 is divided by the insulating isolation structure 400 into the low-voltage chamber 1 and the high-voltage chamber 2 that are stacked vertically, with the high-voltage chamber 2 located below the low-voltage chamber 1. This configuration facilitates the accommodation of the battery clusters in the high-voltage busbar system 300 in the high-voltage chamber 2. In other embodiments, the low-voltage chamber 1 and the high-voltage chamber 2 may also be arranged side by side along the horizontal plane, and this embodiment does not impose limitations.

In one or more embodiments, an air intake assembly 112 and an air exhaust assembly 113 are disposed on the main body 110, the air intake assembly 112 is configured to drive external gas to enter the accommodation cavity 111, and the air exhaust assembly 113 is configured to drive gas in the accommodation cavity 111 to be discharged to the outside. By configuring the main body 110 with the air intake assembly 112 and the air exhaust assembly 113, the external air and the air inside the cabinet body 100 can circulate, and the heat dispersion effect on the low-voltage control system 200 and the high-voltage busbar system 300 in the cabinet body 100 can be enhanced, thereby improving the protection of the low-voltage control system 200 and the high-voltage busbar system 300. It should be noted that in other embodiments, the air intake assembly 112 is disposed at the lower end of the main body 110 and the air exhaust assembly 113 is disposed at the upper end of the main body 110 to optimize the air circulation effect of the main body 110. In other embodiments, only the air intake assembly 112 or only the air exhaust assembly 113 may be arranged on the main body 110. This embodiment is not limited to these configurations.

Exemplarily, the air intake assembly 112 includes a filter window and a fan; an air inlet is opened on the main body 110, and the filter window seals the air inlet; the fan is disposed at one end of the filter window adjacent to the accommodation cavity 111 and is configured to drive the external gas to enter the accommodation cavity 111 through the filter window. The air inlet is opened on the main body 110 and is blocked by the filter window. Moreover, the fan is disposed on an end of the filter window adjacent to the accommodation cavity 111 and is configured to drive the external gas to enter the accommodation cavity 111 through the filter window. In this manner, external air can be effectively driven, and the gas entering the accommodation cavity 111 can be filtered, thus preventing debris from entering the accommodation cavity 111 through the air inlet, and enhancing the protection of the low-voltage control system 200 and the high-voltage busbar system 300. It should be noted that in this embodiment, the filter window is a louver. In other embodiments, the filter window may be a tensioned frame with a filter mesh. This embodiment does not impose limitations.

Additionally, the structure of the air exhaust assembly 113 is the same as that of the air intake assembly 112. For brevity, further details are not provided here.

To facilitate the observation of the use of the marine busbar cabinet, an indicator light 122 is disposed on the door body 120 and is connected to a wiring harness of the low-voltage control system 200. The indicator light 122 is configured on the door body 120 and is connected to the wiring harness of the low-voltage control system 200 so that personnel can determine the use of the marine busbar cabinet by observing the indicator light, and the indication effect is good. Furthermore, the indicator light 122 can switch between off, steady-on, and flashing states. The switching of the indicator light 122 between off, steady-on, and flashing states enhances the indication effect for the personnel. It should be noted that the indicator light 122 includes but is not limited to an operational indicator, a fault indicator, an alarm indicator, a low SOC (state of charge) indicator, a high-temperature indicator, a power loss indicator, a start/stop indicator, and a reset indicator. Understandably, in other embodiments, the indicator light information of the indicator light may be adjusted based on functional requirements. This embodiment does not impose limitations.

Additionally, a touch screen 123 is also disposed on the door body 120 and is connected to the wiring harness of the low-voltage control system 200, and the touch screen 123 is configured to control the low-voltage control system 200. The touch screen 123 is disposed on the door body 120 and is connected to the wiring harness of the low-voltage control system 200 so that the touch screen 123 can control the low-voltage control system 200. When the power output of the marine busbar cabinet needs to be adjusted, this purpose can be done by controlling the touch screen 123, without the need to open the door body 120 to adjust the low-voltage control system 200. Thus, the adjustment process is simplified, and adjustment efficiency is improved. It should be noted that the structure and operating principle of the touch screen 123 are part of the related art and are not repeated herein.

To improve the operational safety of the marine busbar cabinet, an emergency stop button 124 is also disposed on the door body 120 and is connected to a wiring harness of the high-voltage busbar system 300, and the emergency stop button 124 is configured to independently control the activation and deactivation of the high-voltage busbar system 300. By configuring the emergency stop button 124 connected to the wiring harness of the high-voltage busbar system 300 on the door body 120, the emergency stop button 124 can independently control the activation and deactivation of the high-voltage busbar system 300. In case of an emergency with the marine busbar cabinet, the high-voltage busbar system 300 can be deactivated immediately by pressing the emergency stop button 124, thus ensuring operational safety of the marine busbar cabinet.

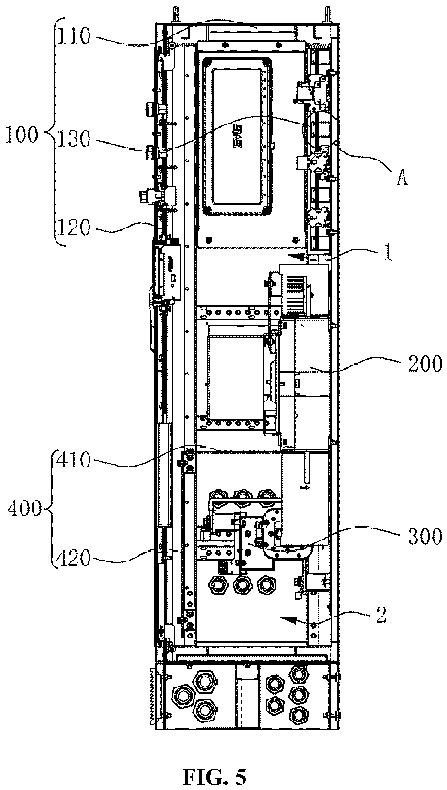

In one or more embodiments, as shown in FIG. 3, FIG. 5, and FIG. 6, the cabinet body 100 also includes a wiring structure 130, and the wiring structure 130 is disposed in the accommodation cavity 111 and is configured to accommodate the wiring harness of the low-voltage control system 200 and the wiring harness of the high-voltage busbar system 300. The wiring structure 130 accommodates the wiring harnesses of both the low-voltage control system 200 and the high-voltage busbar system 300 so that the storage effect for the harnesses of the low-voltage control system 200 and the high-voltage busbar system 300 can be improved. Moreover, the tidiness in the accommodation cavity 111 is improved, and future inspection and maintenance are facilitated.

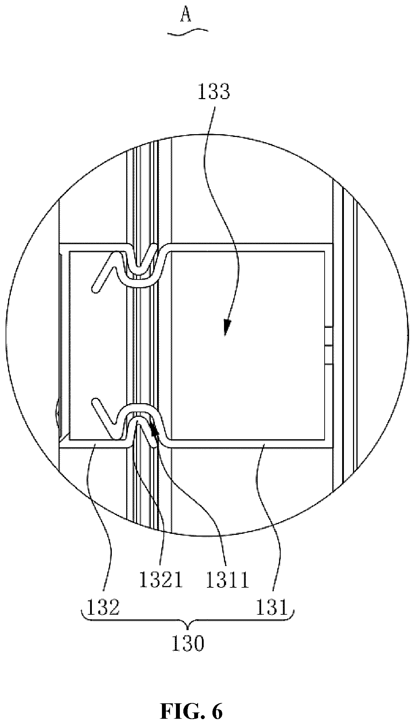

Exemplarily, as shown in FIG. 6, the wiring structure 130 includes a first fastener 131 and a second fastener 132, one of the first fastener 131 and the second fastener 132 is provided with a fastening protrusion 1311, and the other one is provided with a fastening groove 1321. The fastening protrusion 1311 is securely engaged with the fastening groove 1321, a wiring slot 133 is formed between the first fastener 131 and the second fastener 132, and the wiring slot 133 is configured to accommodate the wiring harnesses. The first fastener 131 and the second fastener 132 are configured, one of the first fastener 131 and the second fastener 132 is provided with the fastening protrusion 1311, and the other one is provided with the fastening groove 1321, the engagement between the fastening protrusion 1311 and the fastening groove 1321 can implement the engagement and securing between the first fastener 131 and the second fastener 132. Moreover, the wiring slot 133 is formed between the first fastener 131 and the second fastener 132 to store the wiring harnesses. It should be noted that in this embodiment, the first fastener 131 is provided with the fastening protrusion 1311, the second fastener 132 is provided with the fastening groove 1321, the fastening protrusion 1311 extends in the extension direction of the first fastener 131, and the fastening groove 1321 extends in the extension direction of the second fastener 132. In other embodiments, the fastening groove 1321 may also be disposed on the first fastener 131 while the fastening protrusion 1311 may be disposed on the second fastener 132. This embodiment does not impose limitations.

Additionally, in this embodiment, the first fastener 131 and the second fastener 132 are both made of sheet metal beams, and the fastening protrusion 1311 and the fastening groove 1321 are formed through bending processes. Using sheet metal beams for the first fastener 131 and the second fastener 132 can effectively reduce manufacturing complexity and increase production efficiency.

In one or more embodiments, as shown in FIG. 1, the cabinet body 100 is also provided with a charging connector 140 and a discharging connector 150 to facilitate connection of the high-voltage busbar system 300 to a charging device and powered equipment. It should be noted that in this embodiment, the charging connector 140 and the discharging connector 150 are both explosion-proof cable glands, which provide excellent sealing and explosion isolation, with safe and reliable structures and ease of installation. In other embodiments, the charging connector 140 and the discharging connector 150 may also be other types of connectors. This embodiment does not impose limitations.

## Claims

1. A marine busbar cabinet, comprising:
a low-voltage control system (200);
a high-voltage busbar system (300), comprising at least two battery clusters, wherein the at least two battery clusters satisfy at least one of being connected in series or being connected in parallel, and the low-voltage control system (200) is electrically connected to the at least two battery clusters;
a cabinet body (100), comprising an accommodation cavity (111) configured to accommodate the low-voltage control system (200) and the high-voltage busbar system (300); and
an insulating isolation structure (400) disposed in the accommodation cavity (111), wherein the insulating isolation structure (400) is configured to divide the accommodation cavity (111) into a low-voltage chamber (1) and a high-voltage chamber (2) that are insulated from each other, the low-voltage control system (200) is disposed in the low-voltage chamber (1), and the high-voltage busbar system (300) is disposed in the high-voltage chamber (2).

2. The marine busbar cabinet according to claim 1, wherein the cabinet body (100) comprises:
a main body (110) having the accommodation cavity (111), wherein the accommodation cavity (111) is provided with an opening, and the insulating isolation structure (400) is configured to be inserted into the accommodation cavity (111) along the opening; and
a door body (120) connected to the main body (110) and configured to seal the opening.

3. The marine busbar cabinet according to claim 2, wherein the insulating isolation structure (400) comprises a first bending portion (410) and a second bending portion (420) connected to the first bending portion (410),
wherein an extending direction of the first bending portion (410) is perpendicular to a plane where the opening is located, an extending direction of the second bending portion (420) is parallel to the plane where the opening is located, and the second bending portion (420) is disposed at an end of the accommodation cavity (111) adjacent to the opening;
the low-voltage chamber (1) is formed by enclosing the first bending portion (410) and part of a cavity wall of the accommodation cavity (111), and the low-voltage chamber (1) is in direct communication with the opening; and
the high-voltage chamber (2) is formed by enclosing the second bending portion (420), the first bending portion (410), and part of the cavity wall of the accommodation cavity (111), and the high-voltage chamber (2) is not in direct communication with the opening.

4. The marine busbar cabinet according to claim 2, wherein the cabinet body (100) further comprises a wiring structure (130), wherein the wiring structure (130) is disposed in the accommodation cavity (111) and is configured to accommodate a wiring harness of the low-voltage control system (200) and a wiring harness of the high-voltage busbar system (300).

5. The marine busbar cabinet according to claim 4, wherein the wiring structure (130) comprises:
a first fastener (131); and
a second fastener (132); wherein any one of the first fastener (131) and the second fastener (132) is provided with a fastening protrusion (1311), and the other one of the first fastener (131) and the second fastener (132) is provided with a fastening groove (1321), the fastening protrusion (1311) is fixedly fastened with the fastening groove (1321), a wiring slot (133) is formed between the first fastener (131) and the second fastener (132), and the wiring slot (133) is configured to accommodate the wiring harness of the low-voltage control system (200) and the wiring harness of the high-voltage busbar system (300).

6. The marine busbar cabinet according to any one of claims 3 to 5, wherein an indicator light (122) is disposed on the door body (120) and connected to a wiring harness of the low-voltage control system (200).

7. The marine busbar cabinet according to claim 6, wherein a touch screen (123) is further disposed on the door body (120) and is connected to the wiring harness of the low-voltage control system (200), and the touch screen (123) is configured to control the low-voltage control system (200).

8. The marine busbar cabinet according to claim 6 or 7, wherein an emergency stop button (124) is further disposed on the door body (120) and is connected to a wiring harness of the high-voltage busbar system (300), and the emergency stop button (124) is configured to independently control activation and deactivation of the high-voltage busbar system (300).

9. The marine busbar cabinet according to any one of claims 2 to 8, wherein the main body (110) satisfies at least one of the following:
an air intake assembly (112) is disposed on the main body (110) and is configured to drive external gas to enter the accommodation cavity (111); or
an air exhaust assembly (113) is disposed on the main body (110) and is configured to drive gas in the accommodation cavity (111) to be discharged to outside.

10. The marine busbar cabinet according to claim 9, wherein the air intake assembly (112) comprises:
a filter window, wherein an air inlet is opened on the main body (110), and the filter window seals the air inlet; and
a fan, wherein the fan is disposed at an end of the filter window adjacent to the accommodation cavity (111) and is configured to drive the external gas to enter the accommodation cavity (111) through the filter window.

11. The marine busbar cabinet according to claim 9 or 10, wherein both the air intake assembly (112) and the air exhaust assembly (113) are provided in the main body (110), the air intake assembly (112) is disposed at a lower end of the main body (110), and the air exhaust assembly (113) is disposed at an upper end of the main body (110).

12. The marine busbar cabinet according to any one of claims 1 to 11, wherein the low-voltage control system (200) comprises a control switch (210), a battery management system (220), and a switching power supply (230), the switching power supply (230) is configured to switch an output voltage type of the at least two battery clusters, the battery management system (220) and the switching power supply (230) are arranged on two sides of the cabinet body (100), respectively, and the battery management system (220) is connected to each of the at least two battery clusters via a wiring harness.

13. The marine busbar cabinet according to any one of claims 2 to 12, wherein the cabinet body (100) is further provided with a charging connector (140) and a discharging connector (150) for connection of the high-voltage busbar system (300) to a charging device and powered equipment.

14. The marine busbar cabinet according to any one of claims 2 to 13, wherein the opening is located on a side of the accommodation cavity (111), the low-voltage chamber (1) and the high-voltage chamber (2) are stacked vertically, and the high-voltage chamber (2) is located below the low-voltage chamber (1).

15. The marine busbar cabinet according to any one of claims 2 to 14, wherein the door body (120) is pivotally connected to the main body (110), and a handle (121) is disposed on the door body (120) to enable a rotation of the door body (120) relative to the main body (110).
